# EUROPEAN PATENT SPECIFICATION

(11) **EP 0 404 141 B1**
(45) Date of publication and mention of the grant of the patent: **04.08.1993**
(21) Application number: 90111733.3
(22) Date of filing: 21.06.1990
(51) Int. Cl.: A01C 15/00

(54) **Appliance for distributing fertilizer**
Düngestreuer
Appareil pour épandre les engrais

(30) Priority: 23.06.1989 DK 3134/89
(43) Date of publication of application: 27.12.1990
(73) Proprietor: A.P. Laursen A/S, DK-7171 Uldum (DK)
(72) Inventor: Nielsen, Thorkild, DK-7100 Vejle (DK)
(74) Representative: Roerboel, Leif

(56) References cited:
- DE-A- 1 582 349
- DE-A- 2 518 397
- DE-B- 1 180 562
- FR-A- 1 355 252
- GB-A- 2 144 021

## Description

The invention relates to a fertilizer distributor of the type that comprises a chassis on wheels and having a dump body mounted thereon, in which body fertilizer can be stored, and a spreading device mounted at the rear edge of said dump body in the form of a funnel-shaped container with a spreading disc placed at the outlet of said container, the spreading device being pivotably mounted on the wheeled chassis such that the spreading disc may be adjusted to be either mainly parallel to the ground or turned to an inclined position relative thereto.

When such an appliance is in use, the unit consisting of the spreader and the dump body is drawn over the field by a tractor, and the supply of fertilizer on the body is emptied successively during the driving down into the container in the spreading aggregate itself, and from there the fertilizer is spread out in a way known per se. The flow of fertilizer from the dump body down into the container is regulated from the driver's seat in the tractor by lifting up the dump body to a steadily steeper turning position.

In this known type of machine, the spreading aggregate is fastened in the vehicle's wheeled chassis and follows the movements of same in a rigid way. In practice, this leads to the problem that the angle of the spreading disc or discs to the horizontal level, i.e. the ground changes depending on external factors, such as tyre pressure, coupling of tractor and vehicle, nature of the ground etc. There is no possibility of compensating for these external influences. Furthermore, there is no possibility of adjusting the rotating disc of the spreading aggregate in order to obtain another spreading pattern. The fertilizer is thrown out from the spreading disc by the effect of the centrifugal forces present, and the range becomes maximal, when the spreading disc forms an angle of 45° to the ground. In case of large ranges the spreading out quantity per area unit becomes on the other hand smaller in the sprayed area. In this connection, one has to be aware of the fact that the fertilizer leaves the spreading disc from different sections thereof.

DE-A-25 18 397 discloses an appliance for distributing fertilizer comprising a wheeled chassis and a dump body mounted thereon. A spreading device having a funnel-shaped container is mounted at the rear edge of the dump body and has a spreading disc situated at the outlet of the container. Although it is not explicitly stated, it is clear that the spreading device is rotatably mounted on the chassis such that the spreading disc is adjustable to positions either mainly parallel to the ground or inclined thereto. This is derivable from the mounting of the spreader which includes a hydraulic cylinder, extension of which would cause the spreader mounting frame to rotate about its attachment to the chassis, although the main function of the hydraulic cylinder is to raise and lower other types of devices also mountable on the chassis.

In this document the pivot axis for the dump body is placed high above the chassis, which gives the disadvantage of a higher centre of gravity and therefore a lower stability thereof.

The object of this invention is to improve the known machine in such a way that a possibility arises of finely adjusting the position of the spreading aggregate in relation to the ground as well as a possibility of adjusting the spreading discs of the spreading aggregate at an arbitrary angle to the ground at the same time achieving with simple constructive means a good sealing between the dump body and the container.

According to the invention, this object is achieved by an appliance of the type mentioned in the introduction, and characterised in that the dump body and the spreading aggregate are arranged so as to turn around the same axis lateral to and at the rear edge of the dump body, and that the inner sides of the spreading device are provided with plates of a low-friction material and arranged to seal against corresponding plates on the outer sides of the dump body, and in that the spreading disc is plane.

By having both the spreading aggregate and the dump body mounted rotatably on the chassis of the vehicle and about the same axis, a simple way of supplying and fertilizer as hitherto to the spreading aggregate in the requested quantity during a determined time interval at the same time as the spreading discs of the spreading aggregate can be adjusted independently of the position of the dump body and in a desired position in relation to the ground. The wear-and-tear plates on the inside of the container in connection with the outer side of the dump body secures the desired sealing.

According to the invention, the rear edge of the dump body can be designed as a hollow tube arranged at its open ends to receive a bearing tap which also runs through a hole in the side of the spreading aggregate, said hole being flush with the tube, and further through a flap on the chassis.

This assembly of the spreading aggregate and the dump body is simple and reliable and offers the possibility of a simple assembly and separation of the two parts which can be useful when repairing and cleaning.

In a preferred embodiment, the container of the spreading aggregate is open towards the dump body and provided with an elastic tightening strip in the entire width of the container and abutting the top side of the hollow tube at the rear edge of the body.

In this manner an effective sealing is achieved between the spreading aggregate and the dump body irrespective of which mutual turning position the two parts occupy. The tightening strip will be capable of following the curved outer side of the tube and form a tight-fitting connection.

According to the invention, a threaded spindle connection can be inserted between the wheeled chassis and the spreading aggregate, which permits turning of the spreading aggregate in relation to the chassis and around the afore-mentioned axis.

By a suitable design and placement of the threaded spindle connection, an operator will be able manually to adjust the spreading aggregate in relation to the chassis.

In a possible embodiment of an appliance according to the invention, a device can be placed on the spreading aggregate indicating the turning position in relation to the horizontal as well as a scale for adjustment of the turning position of the aggregate in relation to the horizontal.

In this way, the operator obtains an immediate possibility of making a correct adjustment of the spreading aggregate to an exact angle position without any particular auxilliary means. This is important as a deviation of only 1° is sufficient to essentially effect the spreading pattern being produced.

In practice, by the invention the advantage is generally achieved that the spreading tables worked out for use in spreading aggregates on chassis with spreading discs inclined in relation to the ground can be applied immediately also in connection with spreading aggregates which are mounted at the rear end of a dump body. As mentioned, this type of spreading aggregate has previously been mounted fixedly on the chassis and therefore with a spreading disc that mainly runs parallel to the ground.

In the following, the invention will be described further with reference to the drawing, in which
Figure 1 schematically shows an appliance according to the invention, and
Figure 2 a longitudinal cross-section of the appliance shown in Figure 1.

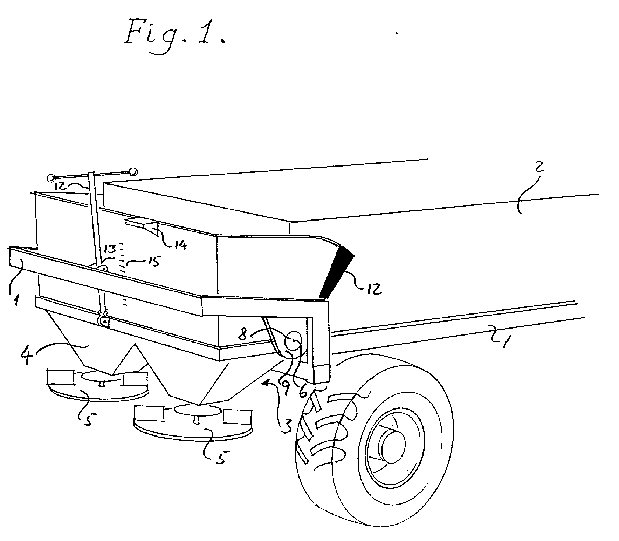

In Figure 1 a vehicle is shown with a chassis 1, which at its end away from the one shown on the drawing is drawn by for instance a tractor. In the chassis 1 a dump body 2 is placed arranged to turn around the axis 6.

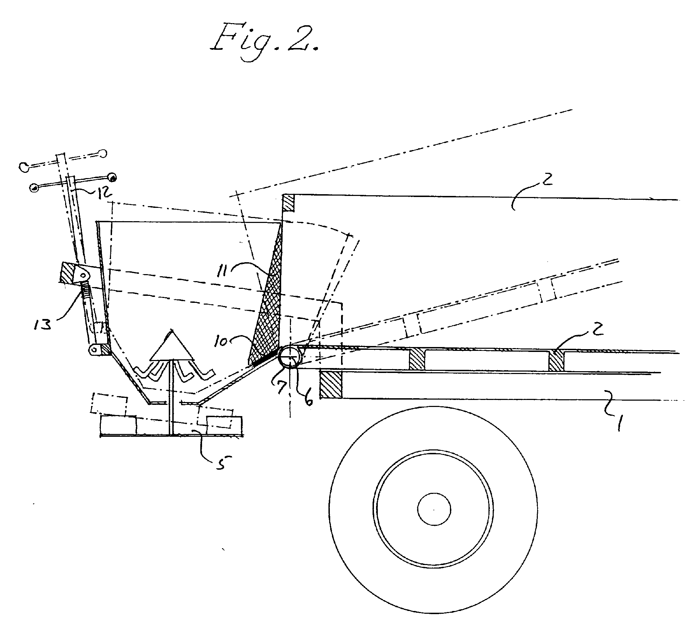

At the rear edge of the dump body a spreader known per se is mounted with two spreading discs 5 rotating in opposite directions, the spreading aggregate collectively being designated by the reference number 3. The spreading discs 5 are placed under funnel-shaped outlets 4. Between the chassis 1 and the spreading aggregate 3 a threaded spindle connection 12, 13 is inserted, and the spreading aggregate is arranged to be cabable of turning in relation to the chassis 1 by means of a bearing tap 8 inserted through holes in the side flaps 9, such as is further explained under reference to Figure 2.

As is shown in Figure 1, the threaded spindle 12 can be provided with a turning handle, and a turning of the spindle 12, which is received in a threaded bushing 13 in the chassis 1 will give rise to a vertical shifting of the rear part of the spreading aggregate 3 and consequently a turning around the axis 6.

On the spreading aggregate an indicator 14 is mounted that indicates deviation from the horizontal. In a simple embodiment this indicator can be a conventional spirit level. At the same time, on the container there is a scale 15 which indicates the deviation in relation to a level adjusted by the indicator 14, usually horizontal.

In Figure 2, different turning positions of dump body and spreading aggregate in relation to each other are indicated by a longitudinal cross-section and by dot-and-dash lines. In Figure 2, it is shown that the axis of rotation 6 is the geometrical mid-point for a hollow tube 7, which forms the end of the body 2. The bearing tap 8 shown in Figure 1 is led through a flap 9 fastened to the chassis 1, and further through an in-line opening in the container side wall and into the tube 7.

In Figure 2 is indicated a tightening strip 10 which runs across the dump body and is fastened to the inclined side walls of the aggregate. The tightening strip 10 overlaps the tube 7 and abuts against same in a tightening way.

At the inner side edge of the container of the spreading aggregate a plate 11 is placed made of a low-friction material. This plate is arranged to co-act with a corresponding plate 12 on the outer side surface of the dump body.

The invention is not restricted to the design shown and described on the drawing but can be modified within the frames of the invention defined in the patent claims. Thus, it will be possible to use another form of adjustment mechanism between the chassis 1 and the spreading aggregate 3 than the shown threaded spindle connection. For instance, a spindle motor operated from the driver's seat can be used, which possibly can be controlled by a calculator.

## Claims

1. An appliance for distributing fertilizer comprising a wheeled chassis (1) and a dump body (2) mounted thereon, in which body a supply of fertilizer can be stored, as well as a spreading device (3) in the form of a funnel-shaped container (4) said spreader mounted at the rear edge of the dump body (2), a spreading disc (5) situated at the outlet of the container, the spreading device (3) being pivotably mounted on the wheeled chassis (1) such that the spreading disc (5) may be adjusted either to be mainly parallel to the ground or turned to an inclined position in relation thereto, characterised in that the dump body (2) and the spreading device (3) are arranged so as to turn around the same axis (6) lateral to and at the rear edge of the dump body (2), and that the inner sides of the spreading device are provided with plates (11) of a low-friction material and arranged to seal against corresponding plates (12) on the outer sides of the dump body (2), and in that the spreading disc is plane.

2. An appliance according to claim 1, **characterized** in that the rear edge of the dump body (2) is formed as a hollow tube (7) arranged at its open ends to receive a bearing tap (8) which furthermore runs through a hole in the side of the spreading device (3) which hole flushes with the tube, and through a flap (9) on the chassis.

3. An appliance according to claim 2, **characterized** in that the container (4) of the spreading device (3) is open towards the dump body (2) and provided with an elastic tightening strip (10) in the whole width of the container and abutting the top side of the hollow tube (7) at the rear edge of the dump body.

4. An appliance according to claims 1 to 3, **characterized** in that a threaded spindle connection (12, 13) is inserted between the wheeled chassis (1) and the spreading device (3), which makes it possible for the spreading device (3) to turn in relation to the chassis (1) and around the mentioned axis (6).

5. An appliance according to any one of the claims 1 to 4, **characterized** in that a member (14) is placed on the spreading device (3), said member indicating the turning position in relation to horizontal, and a scale (15) for adjustment of a turning position of the device (3) in relation to the horizontal.

## Patentansprüche

1. Vorrichtung zum Verteilen von Dünger mit einem Chassis (1) auf Rädern und einem darauf angeordneten Kippkasten (2), wobei in dem Kippkasten ein Düngervorrat gelagert werden kann, wie auch mit einer Streuvorrichtung (3) in Form eines trichterförmigen Behälters (4), wobei dieser Streuer an der Rückkante des Kippkastens (2) angeordnet ist, mit einer an dem Auslad des Behälters befindlichen Streuscheibe (5), wobei die Streuvorrichtung (3) so schwenkbar an dem Chassis (1) auf Rädern angeordnet ist, daß die Streuscheibe (5) entweder im wesentlichen parallel zum Boden einstellbar ist oder in eine schräge Position relativ dazu gedreht werden kann, dadurch gekennzeichnet, daß der Kippkasten (2) und die Streuvorrichtung (3) so angeordnet sind, daß sie um die gleiche Achse (6) quer zur und an der Rückkante des Kippkastens (2) drehen und daß die Innenseiten der Streuvorrichtung mit Platten (11) aus einem Material mit geringer Reibung versehen sind und zum Abdichten gegen entsprechende Platten (12) an den Außenseiten des Kippkastens (2) angeordnet sind, und daß die Streuscheibe eben ist.

2. Vorrichtung nach Anspruch 1, dadurch gekennzeichnet, daß die Rückkante des Kippkastens (2) als ein hohles Rohr (7) ausgebildet ist, das an seinen offenen Enden einen Lageranschluß (8) aufnimmt, der außerdem durch ein Loch in der Seite der Streuvorrichtung (3) und durch eine Klappe (9) an dem Chassis verläuft, wobei das Loch mit dem Rohr bündig ist.

3. Vorrichtung nach Anspruch 2, dadurch gekennzeichnet, daß der Behälter (4) der Streuvorrichtung (3) zum Kippkasten (2) offen ist und über die gesamte Breite des Behälters mit einem elastischen Feststellband (10) versehen ist, und an der Oberseite des hohlen Rohrs (7) an der Rückkante des Kippkastens anliegt.

4. Vorrichtung nach einem der Ansprüche 1 bis 3, dadurch gekennzeichnet, daß eine Gewindespindelverbindung (12, 13) zwischen dem Chassis (1) auf Rädern und der Streuvorrichtung (3) eingesetzt ist, die ermöglicht, daß die Streuvorrichtung (3) im bezug zu dem Chassis (1) und um die genannte Achse (6) drehbar ist.

5. Vorrichtung nach einem der Ansprüche 1 bis 4, dadurch gekennzeichnet, daß ein Element (14) an der Streuvorrichtung (3) angeordnet ist, wobei das Element die Drehstellung in bezug zur Waagerechten anzeigt, und eine Skala (15) zur Einstellung einer Drehstellung der Vorrichtung (3) in bezug zur Waagerechten.

## Revendications

1. Appareil d'épandage d'engrais comprenant un châssis monté sur roues (1) et un bac basculant (2) monté dessus, dans lequel une charge d'engrais peut être stockée, ainsi qu'un dispositif d'épandage (3) qui se présente sous la forme d'un conteneur conformé en entonnoir (4), ledit dispositif d'épandage étant monté au niveau du bord arrière du bac basculant (2), un disque d'épandage (5) situé au niveau de la sortie du conteneur, le dispositif d'épandage (3) pouvant être monté de façon pivotante sur le châssis monté sur roues (1) de telle sorte que le disque d'épandage (5) puisse être réglé soit pour être essentiellement parallèle au sol soit pour être placé dans une position inclinée par rapport à celui-ci, caractérisé en ce que le bac basculant (2) et le dispositif d'épandage (3) sont agencés de manière à tourner autour du même axe (6) latéralement par rapport au bac basculant (2) et au niveau du bord arrière de celui-ci, et en ce que les côtés internes du dispositif d'épandage sont munis de plaques (11) réalisées en un matériau à faible friction et agencées de manière à établir une étanchéité contre les plaques correspondantes (12) sur les côtés externes du bac basculant (2) et en ce que le disque d'épandage est plan.

2. Appareil selon la revendication 1, caractérisé en ce que le bord arrière du bac basculant (2) est constitué en tant que tube évidé (7) agencé au niveau de ses extrémités ouvertes pour recevoir une connexion en palier (8) qui court en outre au travers d'un trou ménagé dans le côté du dispositif d'épandage (3), lequel trou affleure le tube, et au travers d'un volet (9) prévu sur le châssis.

3. Appareil selon la revendication 2, caractérisé en ce que le conteneur (4) du dispositif d'épandage (3) est ouvert en direction du bac basculant (2) et est muni d'une bande de serrage élastique (10) qui court sur la totalité de la largeur du conteneur et qui vient en butée contre le côté supérieur du tube évidé (7) au niveau du bord arrière du bac basculant.

4. Appareil selon la revendication 1 à 3, caractérisé en ce qu'une connexion d'arbre fileté (12, 13) est insérée entre le châssis monté sur roues (1) et le dispositif d'épandage (3), ce qui permet au dispositif d'épandage (3) de tourner par rapport au châssis (1) ainsi qu'autour de l'axe mentionné (6).

5. Appareil selon l'une quelconque des revendications 1 à 4, caractérisé en ce qu'un élément (14) est placé sur le dispositif d'épandage (3), ledit élément indiquant la position de tournage par rapport à l'horizontale, et une graduation (15) est prévue pour le réglage d'une position de tournage du dispositif (3) par rapport à l'horizontale.
